# DEMANDE DE BREVET EUROPEEN

(11) **EP 1 258 724 A1**
(43) Date de publication de la demande: **20.11.2002**
(21) Numéro de dépôt: 02290137.5
(22) Date de dépôt: 18.01.2002
(51) Int. Cl.: G01N 27/447

(54) **Procédé d'électrophorèse capillaire en solution libre à pH alcalin**

(30) Priorité: 19.01.2001 FR 0100764
(71) Demandeur: SEBIA, 92130 Issy-Les-Moulineaux (FR)
(72) Inventeur: Robert, Frédéric, 91540 Mennecy (FR)
(74) Mandataire: Vaillant, Jeanne

(57) **Abrégé**

L'invention concerne un procédé d'électrophorèse capillaire en solution libre à pH alcalin pour l'analyse d'échantillons cliniques comportant des constituants protéiques, caractérisé en ce qu'il comporte au moins une étape où l'on introduit l'échantillon dans un tube capillaire contenant un tampon d'analyse comportant à titre de tampon un tampon biologique de pKa à 25°C, compris entre 8,8 et 10,7, et au moins un additif capable d'augmenter la force ionique du tampon d'analyse.

## Description

La présente invention concerne un procédé pour la séparation de protéines et peptides par électrophorèse capillaire à l'aide de compositions de tampon d'analyse comportant un additif utile pour cette séparation.

Des analyses de taux de protéines sériques sont souvent utilisées et notamment à des fins diagnostiques. Ainsi la détection de protéines monoclonales peut permettre un diagnostic précoce ou un suivi thérapeutique de certaines pathologies.

Les protéines sont couramment séparées par électrophorèse, soit par électrophorèse conventionnelle sur gel, soit par électrophorèse capillaire (EC). Un des avantages de l'EC réside dans les très faibles quantités d'échantillon utilisées pour une analyse. De plus, l'utilisation de tube capillaire de faible diamètre interne pour effectuer la séparation électrocinétique offre une très bonne dispersion de la chaleur produite par effet Joule. Cette dispersion de chaleur très efficace associée à la forte résistance électrique des tubes capillaires permet d'appliquer des tensions d'analyse élevées, et donc d'obtenir des temps de séparation très courts. L'EC en solution libre, dans lequel le milieu de séparation est une simple solution tampon, est enfin particulièrement pratique car le capillaire peut être facilement reconditionné et rempli avec une nouvelle solution entre chaque analyse.

Afin d'améliorer les séparations réalisées en EC, une technique consiste à utiliser des capillaires dont la surface interne a été traitée. Toutefois, ces revêtements sont peu stables et se détériorent au fur et à mesure de leur utilisation, et sont de ce fait peu fiables pour un grand nombre d'analyses, ce qui limite l'intérêt de cette technique en analyse de routine.

Pour l'analyse des protéines sériques en EC en solution libre, il est intéressant d'utiliser un tampon d'analyse ayant un pH de l'ordre de 9 à 11, de préférence autour de 10.

Parmi les tampons d'analyse alcalins, des tampons borates, tels que décrits au brevet US 5 120 413 sont usuellement utilisés. Ces tampons forment des complexes avec les glycoprotéines. Les protéines sériques sont pour la plupart glyquées. La formation de ces complexes modifie la mobilité électrophorétique des glycoprotéines. Avec un tel tampon borate, à un pH d'environ 10, les protéines sériques se répartissent usuellement en 6 fractions (gamma, bêta-2, bêta-1, alpha-2, alpha-1, albumine). Il existe alors un risque de co-migrations de certaines protéines monoclonales avec les fractions protéiques normales, et lors des analyses, certaines fractions protéiques normales peuvent masquer certaines protéines monoclonales.

Ainsi par exemple, l'analyse de sérums contenant des protéines monoclonales, notamment certaines protéines de type IgM kappa, montre que le pic correspondant co-migre avec une des fractions protéiques (la fraction bêta-2), il en résulte un risque important de non-détection de ces IgM kappa.

La demanderesse a maintenant mis en évidence que des séparations rapides et efficaces de protéines peuvent être réalisées en EC en solution libre en utilisant comme tampon d'analyse, un tampon alcalin, c'est-à-dire à pH allant de 9 à 11, plus précisément autour de 10, comportant à titre de tampon un tampon biologique zwitterionique et en outre au moins un additif susceptible d'augmenter la force ionique du tampon d'analyse.

La présente invention concerne un procédé d'électrophorèse capillaire en solution libre à pH alcalin pour l'analyse d'échantillons cliniques comportant des constituants protéiques, ce procédé comportant au moins une étape où on introduit l'échantillon dans un tube capillaire contenant un tampon d'analyse comportant à titre de tampon, un tampon biologique de pKa à 25°C, compris entre 8,8 et 10,7, et au moins un additif capable d'augmenter la force ionique du tampon d'analyse.

La demanderesse a ainsi mis en évidence que la combinaison du choix d'un tampon biologique zwitterionique à un pH alcalin de l'ordre de 9 à 11, plus précisément autour de 10, et de l'utilisation d'un additif capable d'augmenter la force ionique du milieu d'électrophorèse, permet d'obtenir des séparations améliorées.

Ainsi, les séparations sont reproductibles. En outre, le zwitterion possède une majorité de charges négatives à un pH autour de 10, ce qui peut se révéler intéressant dans le cadre de l'invention.

Enfin, comme cela apparaîtra dans les exemples, certaines protéines apparaissent et peuvent être détectées sous forme d'un pic plus distinct ou clairement séparé des autres fractions, par comparaison avec la détection obtenue avec un tampon borate.

Ainsi, comme cela apparaîtra dans les exemples, les séparations effectuées à l'aide des tampons de la présente invention, permettent d'obtenir une séparation équivalente ou identique à celle qui peut être observée avec les autres techniques, en particulier en électrophorèse sur gel, et ce avec une précision, une reproductibilité et une résolution élevées.

D'autres caractéristiques et avantages de l'invention apparaîtront à la lecture de la description détaillée et des exemples et figures annexés.

Les figure 1A et 1B représentent des électrophérogrammes obtenus par électrophorèse capillaire en utilisant des tampons d'analyse selon l'invention.

Les figures 1C et 1D représentent respectivement le gel et le profil densitométrique du même sérum réalisé par électrophorèse sur gel.

La figure 2A représente un électrophérogramme d'un sérum présentant une gammapathie monoclonale, analysé par électrophorèse capillaire en utilisant le tampon d'analyse selon l'invention.

Les figures 2B et 2C représentent respectivement le gel et le profil densitométrique du même sérum obtenu en électrophorèse sur gel.

La figure 3A représente un électrophérogramme d'un sérum à gammapathie biclonale, analysé par électrophorèse capillaire en utilisant un tampon selon l'invention.

Les figures 3B et 3C représentent respectivement le gel et le profil densitométrique du même sérum réalisé par électrophorèse sur gel.

La figure 4A représente un électrophérogramme d'un sérum à gammapathie monoclonale faible, analysé par électrophorèse capillaire en utilisant un tampon selon l'invention.

Les figures 4B et 4C représentent respectivement le gel et le profil densitométrique du même sérum réalisé par électrophorèse sur gel.

La figure 5A représente un électrophérogramme d'un sérum comportant une protéine monoclonale migrant à la limite des fractions γ et β, analysé par électrophorèse capillaire en utilisant un tampon selon l'invention.

Les figures 5B et 5C représentent respectivement le gel et le profil densitométrique du même sérum, obtenu par électrophorèse sur gel.

La figure 5D représente un électrophérogramme du même sérum analysé par électrophorèse capillaire avec un tampon borate usuel.

La figure 6 représente dix électrophérogrammes numérotés de 1 à 10 d'un même sérum obtenus lors de 10 analyses successives par électrophorèse capillaire avec un tampon selon l'invention.

Selon la présente invention, à titre de tampon d'analyse, on peut utiliser tout tampon usuel connu sous le nom de tampon biologique, c'est-à-dire compatible avec des applications *in vivo,* et ayant un pKa à 25°C compris entre 8,8 et 10,7 adapté à la séparation souhaitée, et utile en électrophorèse en général, et en électrophorèse capillaire en particulier. De préférence, on choisit des tampons biologiques ayant un fort pouvoir tampon autour de pH 10.

Parmi les tampons biologiques utilisables selon l'invention, on peut citer particulièrement un tampon de type Good dont le CAPS ci-dessous et des analogues. Les tampons de Good selon l'invention sont des tampons zwitterioniques de pKa compris à 25°C compris entre 8,8 et 10,7. Les tampons de type Good et leurs analogues comportent des fonctions acide et amine.

Parmi les tampons biologiques utilisables selon l'invention, on peut citer notamment les tampons AMPD (2-amino-2-méthyl-1,3-pronanediol), TABS (acide N-tris[hydroxyméthyl]méthyl-4-amino butane sulfonique), AMPSO (acide 3-[(1,1-diméthyl-2-hydroxyéthyl)amino]-2-hydroxypropanesulfonique), CHES (acide 2-(N-cyclohexylamino)éthanesulfonique), CAPSO (acide 3-[cyclohexylamino]-2-hydroxy-1-propanesulfonique), AMP (2-amino-2-méthyl-1-propanol), CAPS (acide 3-cyclohexylamino-1-propane-sulfonique) et CABS (acide 4-[cyclohexylamino]-1-butanesulfonique), et leurs mélanges. D'autres tampons biologiques zwitterioniques sont utilisables selon l'invention. Les tampons acides aminés ne sont toutefois pas considérés comme faisant partie de la présente invention.

Selon l'invention, on préfère les tampons AMPD, TABS, AMPSO, CAPSO, AMP, CAPS et CABS. De façon plus préférée, on utilise le CAPS, le CAPSO ou le CABS. De façon particulièrement préférée, on utilise le CAPS.

A titre d'additif pour tampon utile selon l'invention et capable d'augmenter la force ionique de l'électrolyte, on peut citer les composés choisis parmi les chlorures, sulfates, sulfonates, carbonates, carboxylates, fluorures ou phosphates de métaux alcalins et leurs mélanges. Parmi eux, on préfère les chlorures, sulfates ou sulfonates, de métaux alcalins et leurs mélanges.

De façon encore plus préférée, on utilise le sulfate.

De préférence, on choisit les sels de sodium et potassium.

Parmi les additifs cités dessus, on préfère le sulfate de sodium.

De préférence, on associe selon l'invention du CAPS et du sulfate de sodium.

Ces composés sont connus en soi et disponibles dans le commerce.

Par échantillon selon l'invention, on entend l'échantillon biologique à analyser, préalablement dilué avec une solution de dilution appropriée ou du tampon d'analyse, par exemple, ou pur, que l'on analyse avec le tampon d'analyse c'est-à-dire l'électrolyte, par exemple en introduisant l'échantillon dans un capillaire rempli de ce tampon.

Comme échantillon clinique, on peut analyser et on entend selon l'invention tout liquide biologique de patients humains sains ou malades. Ainsi, les liquides biologiques humains peuvent être du sérum normal ou pathologique, et aussi du sang hémolysé, du plasma, de l'urine ou du fluide cérébro-spinal. L'invention est particulièrement utile pour analyser le sérum, le plasma, l'urine ou les liquides céphalo-rachidien.

Les échantillons peuvent aussi être des protéines synthétiques, et le procédé de l'invention peut alors avoir des visées de contrôle de production par exemple.

Le procédé selon l'invention est particulièrement utile pour les analyses de sérum, et la séparation de protéines sériques.

Dans les échantillons de sérum, les protéines sériques à séparer sont notamment l'albumine et les fractions α₁- ; α₂- ; β-(ou β₁- et β₂-); et γ-globuline.

Le pH du tampon selon l'invention, c'est-à-dire le pH du tampon biologique avec l'additif, peut varier entre 9 et 11, et de façon particulièrement préférée et d'environ 10.

Les tampons d'analyse selon l'invention peuvent en outre comporter au moins un composé modifiant le pH. A titre de modificateur de pH, on peut utiliser un composé choisi parmi l'hydroxyde de lithium, l'hydroxyde de sodium, l'hydroxyde de potassium, l'hydroxyde de rubidium, l'hydroxyde de césium, l'hydroxyde de francium, un hydroxyde de mono-, di-, tri- ou tétra-alkyl ammonium ayant de 1 à 8 atomes de carbone dans la partie alkyle.

Selon l'invention, les tampons biologiques sont utilisés dans les conditions usuelles, à des concentrations dans le tampon d'analyse de l'ordre de 10 à 500 mM, de préférence supérieures à 20 et inférieures à 200 mM.

Les sels utilisés à titre d'additifs selon l'invention sont utilisés à des concentrations dans le tampon d'analyse allant de 10 mM à 500 mM, de préférence 50 à 200 mM, de façon plus préférée environ 150 mM.

Les tampons d'analyse selon l'invention peuvent en outre comporter au moins un additif comportant un pôle anionique chargé négativement à un pH supérieur à 9, et une partie hydrophobe, et parmi ceux-ci, en particulier les C₆-C₂₂-alkyl-mono- di- ou tri-carboxylates, les C₆-C₂₂-alkyl-mono- di- ou tri-sulfonates et les C₆-C₂₂-alkylcarboxysulfonates, et notamment des C₆ à C₁₀ alkylsulfonates. Les di- et tri-carboxylates, di- et tri-sulfonates et carboxysulfonates ci-dessus sont ainsi des combinaisons de une ou plusieurs fonctions carboxylates ou sulfonates sur des chaînes alkyles de 6 à 22 atomes de carbone ; à titre d'exemple non limitatif, on peut citer l'acide 1,2,3-nonadécanetricarboxylique qui comporte trois fonctions carboxylates et une chaîne en C₁₉, l'acide 2-méthyl-2-sulfooctadecanoique qui comporte une fonction carboxylate et une fonction sulfonate et une chaîne en C₁₈, et l'acide 1,12-dodécanedicarboxylique qui comporte deux fonctions carboxylate et une chaîne en C₁₂. De façon préférée, on utilise de l'octanesulfonate, à des concentrations de l'ordre de 1 à 5 mM, notamment de 1 à 4 mM, de préférence 2,5 mM.

Les compositions de tampon de l'invention sont préparées de façon usuelles pour les compositions de tampon d'analyse, à savoir par adjonction des constituants sous forme liquide, ou solide à diluer, à un support acceptable. De façon usuelle, le support est de l'eau, distillée ou déminéralisée.

Du point de vue des matériaux utilisés pour les capillaires, ceux-ci sont usuels en électrophorèse capillaire. Ainsi, on peut utiliser des capillaires de silice fondue d'un diamètre interne allant de 5 à 200 µm. De façon préférée, on utilise selon l'invention des capillaires de diamètre interne inférieur à 100 µm ; de façon plus préférée, inférieur à 50 µm. On utilise de préférence des capillaires à surface intérieure non traitée. Le spécialiste saura adapter la nature du capillaire et sa taille aux besoins de l'analyse.

### EXEMPLES

### MATERIEL ET METHODES

### A) Electrophorèse capillaire (méthode A)

L'électrophorèse capillaire d'échantillons cliniques est réalisée sur un appareil d'EC équipé d'un capillaire en silice fondue de diamètre interne 25 microns. La détection est réalisée à 200 nm. Les échantillons sont placés dans le passeur d'échantillons de l'appareil et injectés automatiquement par injection hydrodynamique (50 mbars pendant 7 s). La séparation des échantillons est réalisée en moins de 10 minutes en appliquant un champ électrique d'environ 400 V/cm. Le capillaire est lavé avant chaque analyse par la soude 0,5 M, puis par le tampon d'analyse.

### Tampons d'analyse :

Les produits chimiques utilisés sont de grade analytique.

Un premier tampon selon l'invention est préparé en dissolvant 11,07 g de CAPS (masse molaire 221,3 g/mol) et 21,3 g de sulfate de sodium (masse molaire 142,04 g/mol) dans 1l d'eau déminéralisée. La concentration finale est de 50 mM en CAPS et 150 mM en sulfate de sodium, et le pH est ajusté à 10,0 par addition de pastilles de soude (masse molaire : 40,0 g/mol).

Un second tampon d'analyse préféré est préparé comme ci-dessus en lui ajoutant de l'octanesulfonate à une concentration de 2,5 mM.

L'électrophorèse réalisée selon la méthode A ci-dessus avec le tampon CAPS/sulfate de sodium permet d'obtenir un profil protéique à 5 fractions, avec de gauche à droite, les fractions gamma, bêta, alpha-2, alpha-1 et albumine.

Le tampon borate est préparé en dissolvant 9,3 g d'acide borique (masse molaire : 61,83 g/mol) dans 1 l d'eau déminéralisée, et 5,1 g de soude (masse molaire : 40,0 g/mol). La concentration finale est de 150 mM et le pH de 10,0.

L'électrophorèse réalisée selon la méthode A ci-dessus avec ce tampon borate permet d'obtenir un profil protéique à 6 fractions, avec de gauche à droite, les fractions gamma, bêta-2, bêta-1, alpha-2, alpha-1 et albumine.

### B) Electrophorèse sur gel d'agarose (méthode B)

L'analyse comparative de protéines sériques est réalisée sur gel d'agarose. 10 µl de sérum ont été chargés dans chaque puits de l'applicateur à membrane décrit dans les brevets EP 0 493 996, US 5,464,515, US 5,405,516. L'applicateur ainsi chargé a ensuite été appliqué à la surface d'un gel d'agarose pendant 30 s. La séparation de ces échantillons appliqués sur ce gel d'agarose a été obtenue par électrophorèse pendant 7,5 minutes environ et à une puissance de 20 W, sur un instrument permettant de réguler la température à 20°C. Après migration, le gel a été séché et coloré à l'amidoschwarz. Après coloration, le gel est décoloré et séché à nouveau. Les gels sont alors analysés par densitométrie ce qui permet d'obtenir les profils protéiques.

On obtient alors pour un sérum normal un profil protéique à 5 fractions, avec de gauche à droite, les fractions gamma, bêta, alpha-2, alpha-1 et albumine.

### C) Echantillons cliniques :

Pour l'EC, les sérums humains sont dilués au 1/10^{ème} dans le tampon d'analyse.

### Exemple 1

Avec les premier et second tampons ci-dessus, on a analysé du sérum normal.

L'électrophorèse a été réalisée selon la méthode A ci-dessus.

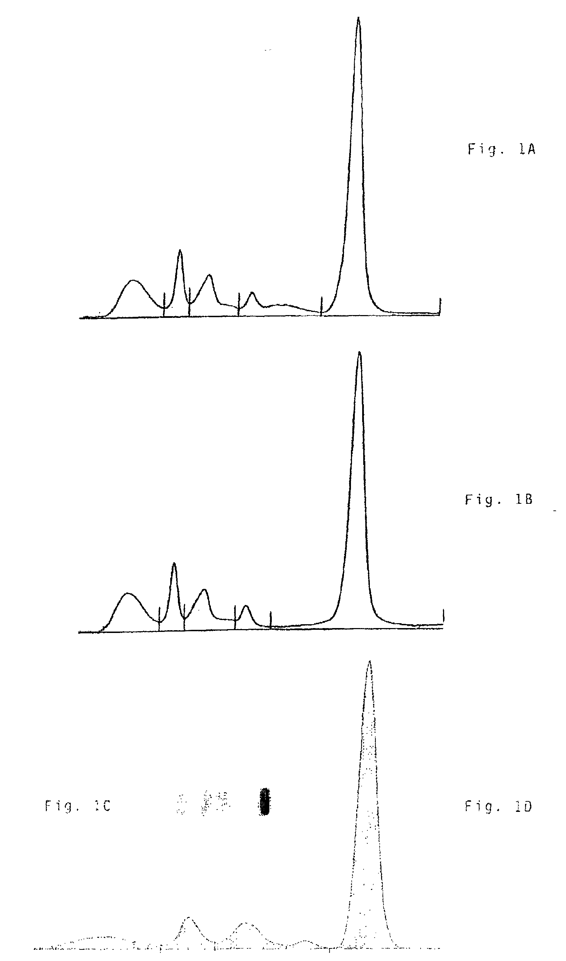

Comme cela apparaît sur les figures 1A et 1B les électrophérogrammes obtenus présentent, de gauche à droite, cinq pics successifs attribués respectivement aux fractions γ, β, α₂, α₁-globuline et albumine.

### Exemple 2 (comparatif)

On obtient le profil protéique (le gel de la figure 1C et son profil densitométrique de la figure 1D) en analysant le même sérum qu'à l'exemple précédent par la méthode B ci-dessus. Comme cela apparaît sur ces figures, le profil protéique obtenu présente, de gauche à droite, 5 fractions γ, β, α2, α1 et albumine. Par comparaison avec le résultat obtenu à l'exemple 1, on constate que les modes de réalisation de l'invention permettent d'obtenir un profil protéique à 5 fractions comparables à celui obtenu sur gel d'agarose.

### Exemple 3

Avec le second tampon ci-dessus, on analyse un sérum à gammapathie monoclonale.

L'électrophorèse a été réalisée comme à l'exemple 1.

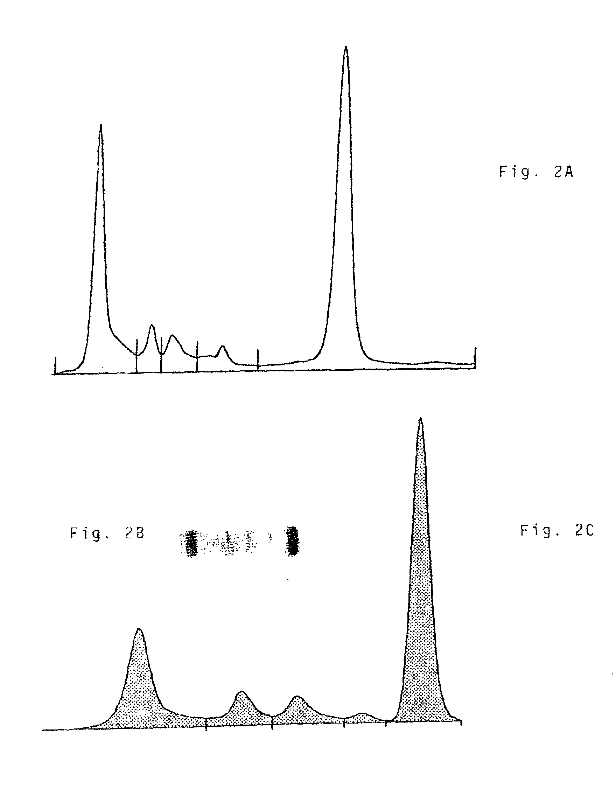

Comme cela apparaît sur la figure 2A, l'électrophérogramme obtenu présente, de gauche à droite, cinq pics successifs attribués respectivement aux fractions γ, β, α₂, α₁-globuline et albumine. On note la présence d'un pic supplémentaire dans la fraction gamma, correspondant à la protéine monoclonale présente dans le sérum analysé.

### Exemple 4 (comparatif)

On obtient le profil protéique (le gel de la figure 2B et son profil densitométrique de la figure 2C) en analysant le même sérum qu'à l'exemple précédent par la méthode B ci-dessus. Par comparaison avec le résultat obtenu à l'exemple 3, on constate que le mode de réalisation de l'invention permet d'obtenir une résolution équivalente à la résolution obtenue sur gel d'agarose.

### Exemple 5

Avec le second tampon ci-dessus, on analyse un sérum à gammapathie biclonale.

L'électrophorèse a été réalisée comme à l'exemple 1.

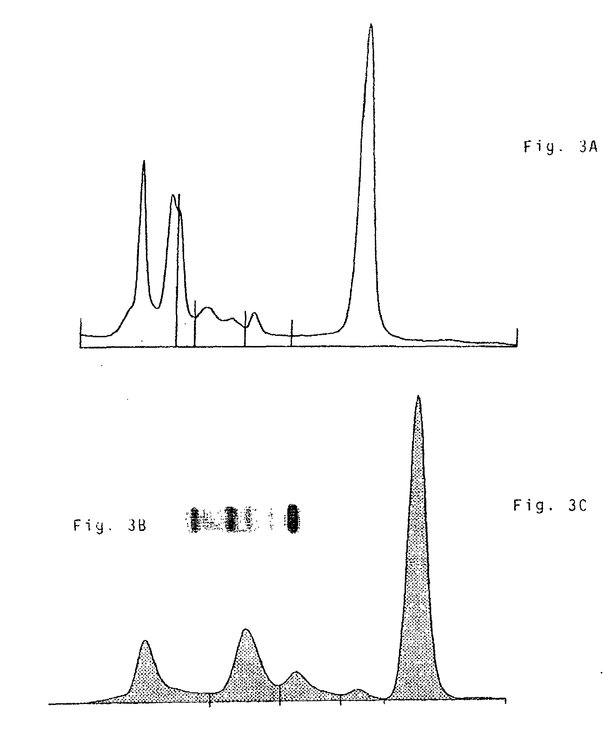

Comme cela apparaît sur la figure 3A, l'électrophérogramme obtenu présente 2 pics supplémentaires dans la fraction gamma, correspondant aux 2 protéines monoclonales présentes dans le sérum analysé.

### Exemple 6 (comparatif)

On obtient le profil protéique (le gel de la figure 3B et son profil densitométrique de la figure 3C) en analysant le même sérum qu'à l'exemple précédent par la méthode B ci-dessus. Par comparaison avec le résultat obtenu à l'exemple 5, on constate que le mode de réalisation de l'invention permet d'obtenir une résolution supérieure à la résolution obtenue sur gel d'agarose. Sur gel d'agarose, l'une des protéines monoclonales co-migre avec la fraction bêta.

### Exemple 7

Avec le second tampon ci-dessus, on analyse un sérum à gammapathie monoclonale faible.

L'électrophorèse a été réalisée comme à l'exemple 1.

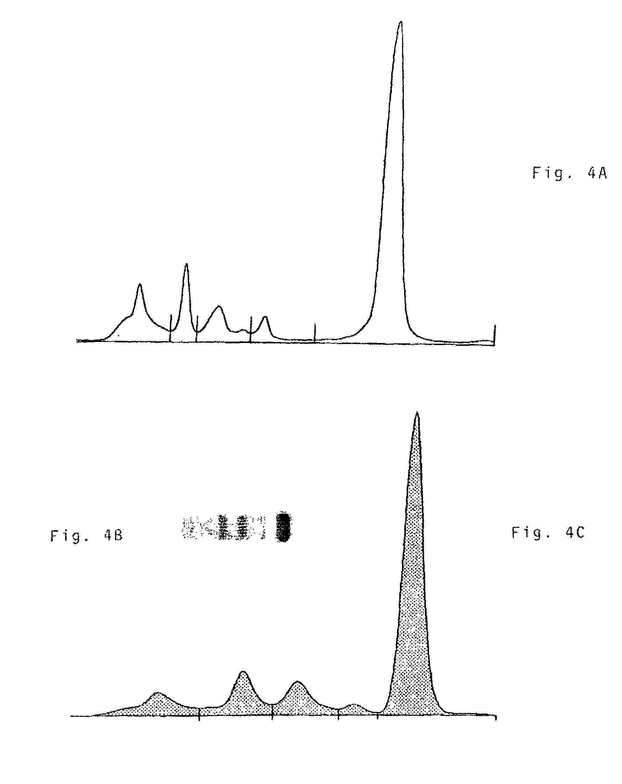

Comme cela apparaît sur la figure 4A, l'électrophérogramme obtenu présente un petit pic supplémentaire dans la fraction gamma, correspondant à la protéine monoclonale présente dans le sérum analysé.

### Exemple 8 (comparatif)

On obtient le profil protéique (le gel de la figure 4B et son profil densitométrique de la figure 4C) en analysant le même sérum qu'à l'exemple précédent par la méthode B ci-dessus. Par comparaison avec le résultat obtenu à l'exemple 7, on constate que le mode de réalisation de l'invention permet d'obtenir une sensibilité identique, comparée à la sensibilité obtenue sur gel d'agarose.

### Exemple 9

Avec le second tampon ci-dessus, on analyse un sérum à protéine monoclonale de type IgM kappa migrant à la limite des fractions γ et β.

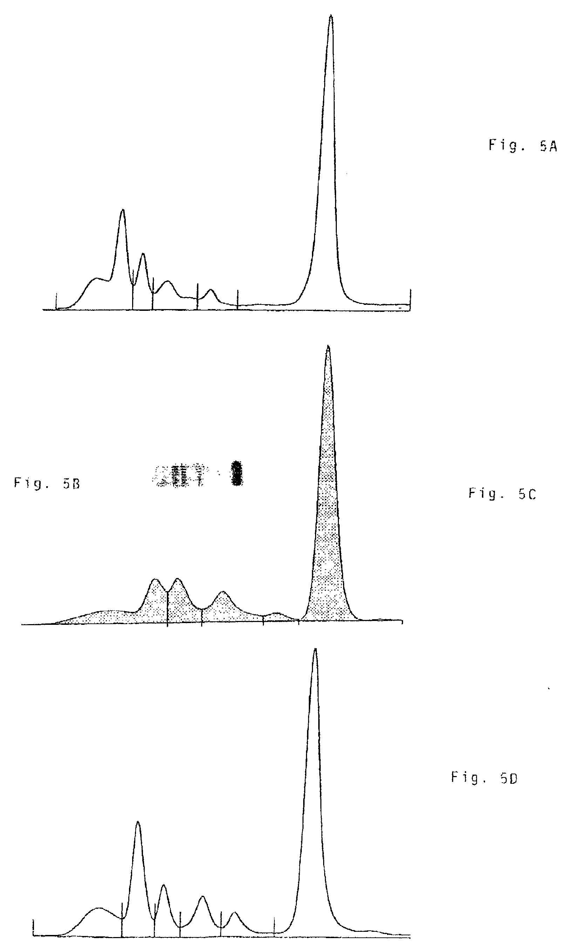

Comme cela apparaît sur la figure 5A, l'électrophérogramme obtenu montre un pic supplémentaire dans la fraction gamma, correspondant à la protéine monoclonale, présente dans le sérum analysé.

### Exemple 10 (comparatif)

On obtient le profil protéique (le gel de la figure 5B et son profil densitométrique de la figure 5C) en analysant le même sérum qu'à l'exemple précédent par la méthode B ci-dessus. Par comparaison avec le résultat obtenu à l'exemple 9, on constate que le mode de réalisation de l'invention permet d'obtenir une détection identique à la détection obtenue sur gel d'agarose.

### Exemple 11 (comparatif)

On opère comme à l'exemple 1, le tampon d'analyse utilisé étant un tampon borate usuel préparé comme indiqué ci-dessus.

L'électrophorèse a été réalisée comme selon la méthode A ci-dessus.

Comme cela apparaît sur la figure 5D l'électrophérogramme obtenu présente, de gauche à droite, six pics successifs attribués respectivement aux fractions γ-, β₂₋, β₁₋, α₂₋, α₁-globuline et albumine.

On ne note aucune perturbation du profil protéique avec ce tampon borate, seule une augmentation du pourcentage de la fraction bêta au-dessus des valeurs normales pourra permettre de suspecter la présence d'une protéine monoclonale dans ce sérum ; par comparaison avec le résultat obtenu à l'exemple 9, on constate que le mode de réalisation de l'invention permet d'obtenir une résolution supérieure par rapport à celle obtenue en EC avec un tampon borate usuel, pour certaines protéines monoclonales du type IgM kappa.

### Exemple 12

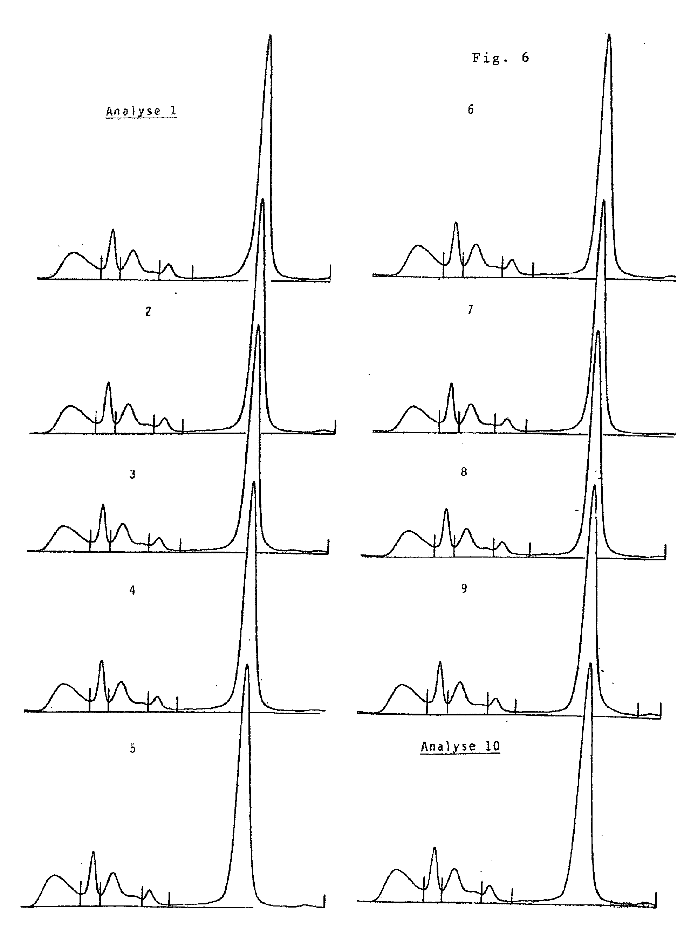

Avec le second tampon préféré, 10 analyses consécutives d'un même sérum ont été effectuées par électrophorèse capillaire selon la méthode A ci-dessus ; comme cela apparaît sur la figure 6, la reproductibilité des profils est excellente.

## Revendications

1. Procédé d'électrophorèse capillaire en solution libre à pH alcalin pour l'analyse d'échantillons cliniques comportant des constituants protéiques, **caractérisé en ce qu'**il comporte au moins une étape où l'on introduit l'échantillon dans un tube capillaire contenant un tampon d'analyse comportant, à titre de tampon, un tampon biologique de pKa à 25°C, compris entre 8,8 et 10,7, et au moins un additif capable d'augmenter la force ionique du tampon d'analyse.

2. Procédé selon la revendication 1, **caractérisé en ce qu'**il comporte en outre la séparation des constituants par migration et la détection de ces constituants.

3. Procédé selon la revendication 1 ou 2, **caractérisé en ce que** l'échantillon est un échantillon de sérum, de plasma, de sang hémolysé, d' urine ou de liquide céphalo-rachidien.

4. Procédé selon l'une des revendications 1 à 3, **caractérisé en ce que** les constituants sont des protéines sériques.

5. Procédé selon l'une des revendications 1 à 4, **caractérisé en ce que** les constituants sont l'albumine et les fractions α₁-, α₂-, β- (ou β₁- et β₂-) et γ-globuline.

6. Procédé selon l'une des revendications 1 à 5, **caractérisé en ce que** le tampon biologique est choisi parmi AMPD, TABS, AMPSO, CHES, CAPSO, AMP, CAPS et CABS.

7. Procédé selon l'une des revendications 1 à 6, **caractérisé en ce que** le tampon biologique est choisi parmi AMPD, TABS, AMPSO, CAPSO, AMP, CAPS et CABS.

8. Procédé selon l'une des revendications 1 à 7, **caractérisé en ce que** le tampon biologique est choisi parmi CAPS, CAPSO et CABS.

9. Procédé selon l'une des revendications 1 à 8, **caractérisé en ce que** le tampon biologique est du CAPS.

10. Procédé de l'une des revendications 1 à 9, **caractérisé en ce que** la concentration en tampon biologique dans le tampon d'analyse est comprise entre 10 et 500 mM.

11. Procédé selon l'une des revendications 1 à 10, **caractérisé en ce que** la concentration en tampon biologique dans le tampon d'analyse est supérieure à 20 et inférieure à 200 mM.

12. Procédé selon l'une des revendications 1 à 11, **caractérisé en ce que** l'additif permettant d'augmenter la force ionique est choisi parmi les chlorures, sulfates, sulfonates, carboxylates, fluorures, carbonates ou phosphates de métaux alcalins et leurs mélanges.

13. Procédé selon l'une des revendications 1 à 12, **caractérisé en ce que** l'additif permettant d'augmenter la force ionique est choisi parmi les chlorures, sulfates, sulfonates, carboxylates, fluorures de métaux alcalins et leurs mélanges.

14. Procédé selon l'une des revendications 1 à 13, **caractérisé en ce que** l'additif permettant d'augmenter la force ionique est un chlorure, sulfate ou sulfonate.

15. Procédé selon l'une des revendications 1 à 14, **caractérisé en ce que** l'additif permettant d'augmenter la force ionique est le sulfate de sodium.

16. Procédé selon l'une des revendications 1 à 15, **caractérisé en ce que** la concentration en additif permettant d'augmenter la force ionique du tampon d'analyse est comprise entre 10 et 500 mM.

17. Procédé selon l'une des revendications 1 à 16, **caractérisé en ce que** la concentration en additif permettant d'augmenter la force ionique de l'électrolyte est supérieure à 50 et inférieure à 200.

18. Procédé selon l'une des revendications 1 à 17, **caractérisé en ce que** les tampons d'analyse comportent en outre au moins un C₆-C₂₂-mono- di- ou tri-carboxylate, C₆-C₂₂-alkyl-mono-, di- ou tri-sulfonate ou C₆-C₂₂-alkylcarboxysulfonate.

19. Procédé selon l'une des revendications 1 à 18, **caractérisé en ce que** les tampons d'analyse comportent en outre un C₆ à C₁₀ alkylsulfonate.

20. Procédé selon l'une des revendications 1 à 19, **caractérisé en ce que** les tampons d'analyse comportent en outre de l'octanesulfonate.

21. Procédé selon la revendication 19 ou 20, **caractérisé en ce que** la concentration en alkylsulfonate est comprise entre 1 et 5 mM.

22. Procédé selon l'une des revendications 1 à 22 **caractérisé en ce que** le pH dudit tampon est compris entre 9 et 11.

23. Procédé selon l'une des revendications 1 à 22 **caractérisé en ce que** le pH dudit tampon est environ 10.

24. Procédé selon l'une des revendications 1 à 23, **caractérisé en ce que** le capillaire est en silice fondue.

25. Procédé selon l'une des revendications 1 à 24, **caractérisé en ce que** le tampon d'analyse comprend en outre au moins un modificateur de pH.
